# FASCICULE DE BREVET EUROPEEN

(11) **EP 2 729 874 B1**
(45) Date de publication et mention de la délivrance du brevet: **13.07.2022**
(21) Numéro de dépôt: 12738544.1
(22) Date de dépôt: 28.06.2012
(51) Int. Cl.: G06F 9/48, G06F 11/14, G06F 9/50

(54) **PROCEDE ET PROGRAMME D'ORDINATEUR DE GESTION DYNAMIQUE DE SERVICES DANS UN CLUSTER D'ADMINISTRATION**
VERFAHREN UND COMPUTERPROGRAMM ZUR DYNAMISCHEN VERWALTUNG VON DIENSTEN IN EINEM ADMINISTRATIONSCLUSTER
METHOD AND COMPUTER PROGRAM FOR THE DYNAMIC MANAGEMENT OF SERVICES IN AN ADMINISTRATION CLUSTER

(30) Priorité: 08.07.2011 FR 1156235
(43) Date de publication de la demande: 14.05.2014
(73) Titulaire: Bull SAS, 78340 Les Clayes-sous-Bois (FR)
(72) Inventeur: MEGY, Virginie, F-38640 Claix (FR); FAVIER, Valérie, F-38410 Saint-martin D'uriage (FR); GILOT, Laurent, F-38190 Froges (FR)
(74) Mandataire: Argyma
(86) Numéro de dépôt international: PCT/FR2012/051488
(87) Numéro de publication internationale: WO 2013/007910

(56) Documents cités:
- WO-A1-2011/051025
- US-A1- 2010 058 108
- US-A1- 2010 325 471
- US-B1- 7 925 923

## Description

La présente invention concerne l'administration de clusters et plus particulièrement un procédé et un programme d'ordinateur de gestion dynamique de services dans un cluster d'administration permettant de rendre ces services hautement disponibles.

Le calcul haute performance, aussi appelé HPC (sigle de *High Performance Computing* en terminologie anglo-saxonne) se développe pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en œuvre sur des systèmes de traitement de données appelés clusters. Un cluster comprend typiquement un ensemble de nœuds interconnectés. Certains nœuds sont utilisés pour effectuer des tâches de calcul (nœuds de calcul), d'autres pour stocker des données (nœuds de stockage) et un ou plusieurs autres gèrent le cluster (nœuds d'administration). Chaque nœud est par exemple un serveur mettant en oeuvre un système d'exploitation tel que Linux (Linux est une marque). La connexion entre les nœuds est, par exemple, réalisée à l'aide de liens de communication Ethernet et de réseaux d'interconnexions (par exemple Infiniband) (Ethernet et Infiniband sont des marques).

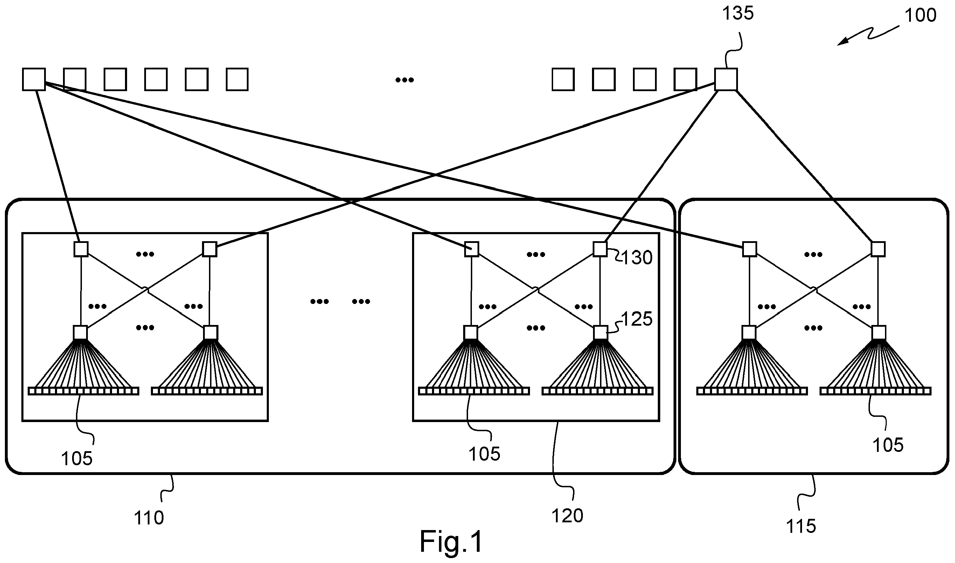

La figure 1 illustre schématiquement un exemple d'une topologie 100 d'un cluster, de type *fat-tree.* Ce dernier comprend un ensemble de nœuds génériquement référencés 105. Les nœuds appartenant à l'ensemble 110 sont ici des nœuds de calcul tandis que les nœuds de l'ensemble 115 sont des nœuds de service (nœuds de stockage et nœuds d'administration). Les nœuds de calcul peuvent être regroupés en sous-ensembles 120 appelés îlots de calcul, l'ensemble 115 étant appelé îlot de service.

Les nœuds sont reliés les uns aux autres par des commutateurs (appelés *switch* en terminologie anglo-saxonne), par exemple de façon hiérarchique. Dans l'exemple illustré sur la figure 1, les nœuds sont connectés à des commutateurs 125 de premier niveau qui sont eux-mêmes reliés à des commutateurs 130 de deuxième niveau qui sont à leur tour reliés à des commutateurs 135 de troisième niveau.

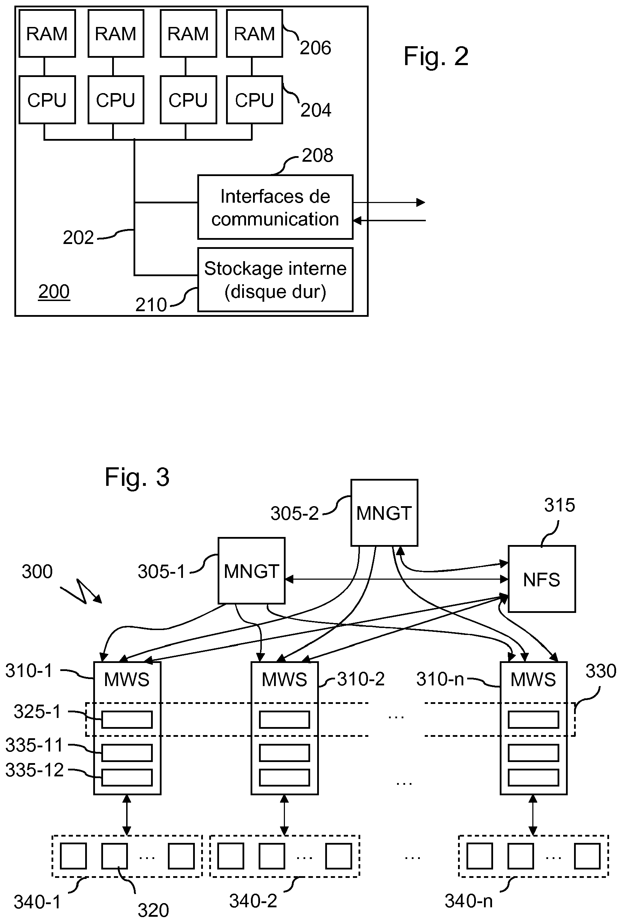

Comme illustré sur la figure 2, chaque nœud comprend généralement un ou plusieurs microprocesseurs, des mémoires locales ainsi qu'une interface de communication. Plus précisément, le nœud 200 comporte ici un bus de communication 202 auquel sont reliés :
- des unités centrales de traitement ou microprocesseurs 204 (ou CPU, sigle de *Central Processing Unit en* terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le nœud 200 dispose en outre ici de moyens de stockage interne 210, tels que des disques durs, pouvant notamment comporter le code exécutable de programmes.

Le bus de communication permet la communication et l'interopérabilité entre les différents éléments inclus dans le nœud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Le nombre de composants mis en œuvre dans un cluster, notamment d'équipements tels que des nœuds et des commutateurs, varie d'un cluster à un autre, avec une tendance à la mise en place de clusters comprenant de plus en plus d'équipements, Il en résulte de nombreux problèmes de scalabilité dans l'administration de ces clusters, En effet, le nombre d'équipements croît plus vite que la capacité de traitement des outils d'administration en raison, notamment, de la conception interne des logiciels utilisés (latence de traitement), des limitations matérielles (flux d'entrée/sortie de plus en plus important) et des limitations des paramètres des systèmes d'exploitation utilisés.

Pour répondre à ces problèmes, un cluster d'administration est généralement mis en œuvre. Il permet de répartir les tâches d'administration sur un ensemble de nœuds de service.

Plusieurs architectures de clusters d'administration, basées sur une répartition par services, par groupes d'équipements ou par services et groupes d'équipements, ont été proposées pour répondre au problème de scalabilité.

A titre d'illustration, il existe des systèmes d'administration de clusters, par exemple le système open source xCAT, composés d'un nœud d'administration central qui réparti l'ensemble des tâches d'administration, de façon statique, sur des nœuds de service. Chaque nœud de service est ici responsable d'un sous ensemble du cluster qu'il gère en intégralité.

Cependant, si de telles solutions permettent de répondre, au moins partiellement, aux problèmes de scalabilité évoqués, elles n'offrent pas de caractéristiques de haute disponibilité appelées *High-Availability* (ou HA) en terminologie anglo-saxonne. Le document US20100325471A1 décrit un procédé de gestion d'une anomalie d'une machine virtuelle dans une plateforme partitionnée logique.

L'invention permet de résoudre au moins un des problèmes exposés précédemment.

L'invention a ainsi pour objet un procédé selon la revendication 1.

Le procédé selon l'invention permet ainsi d'améliorer la disponibilité de services en offrant un mécanisme de continuité d'exécution lorsqu'une anomalie est détectée dans un système d'exécution de services. Le procédé selon l'invention permet en outre de faciliter les opérations de maintenance et/ou de mise en jour en autorisant la libération de ressources de gestion et de surveillance lors de l'utilisation de clusters. Le procédé selon l'invention est ainsi adaptatif et simple à mettre en œuvre. Le procédé selon l'invention permet ainsi d'optimiser l'usage des stations de traitement selon les services à exécuter.

En outre selon un mode de réalisation particulier, le procédé comprend avantageusement une étape d'obtention desdites données de configuration de ladite au moins une machine virtuelle, lesdites données de configuration de ladite au moins une machine virtuelle étant obtenues à partir d'un identifiant de ladite machine virtuelle arrêtée. Le procédé selon l'invention est ainsi simple à mettre en œuvre lorsque des systèmes d'exploitation tel que Linux et qu'une infrastructure haute disponibilité telle que *Cluster Suite* ou *Pacemakersont* utilisés.

Ledit identifiant de ladite machine virtuelle arrêtée, appelé premier identifiant, peut, par exemple, être obtenu à partir d'un second identifiant de ladite machine virtuelle arrêtée, distinct dudit premier identifiant.

Ladite étape d'obtention desdites données de configuration de ladite au moins une machine virtuelle comprend par exemple une étape de synchronisation de données entre un serveur de fichiers et ladite au moins une machine virtuelle.

Selon un mode de réalisation particulier, le procédé comprend en outre une étape d'identification de ladite seconde station de traitement.

Ledit au moins un paramètre d'exécution peut être un paramètre directement lié au fonctionnement de ladite au moins une machine virtuelle ou à ladite première station de traitement.

L'invention a aussi pour objet un programme d'ordinateur comprenant des instructions adaptées à la mise en œuvre de chacune des étapes du procédé décrit précédemment lorsque ledit programme est exécuté sur un ordinateur. Les avantages procurés par ce programme d'ordinateur sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels
- la figure 1 illustre un exemple de topologie d'un cluster
- la figure 2 illustre un exemple d'architecture d'un nœud d'un cluster ;
- la figure 3 illustre schématiquement un exemple de cluster mettant en œuvre l'invention ;
- la figure 4 illustre schématiquement un exemple d'algorithme pour répartir dynamiquement des services dans un cluster d'administration ;
- la figure 5 illustre schématiquement des étapes pour le démarrage d'une machine virtuelle dans une station de traitement permettant la mise en œuvre de services visant un groupe d'équipements ;
- la figure 6 représente un diagramme de séquence simplifié du démarrage d'une machine virtuelle suite à l'arrêt de cette machine virtuelle dans une autre station de traitement ; et,
- la figure 7, comprenant les figures 7a et 7b, illustre un exemple de réaffectation de machines virtuelles dans un cluster d'administration suite à la détection d'une anomalie dans une station de traitement.

De façon générale, l'invention vise à repartir dynamiquement des services dans des nœuds de service afin de les rendre hautement disponibles dans un cluster d'administration basé sur une architecture hiérarchique et reposant sur répartition mixte, basée sur une répartition par services et par groupes d'équipements. Les services ont pour objet, par exemple, d'accéder à une console de nœuds de calcul, par exemple pour obtenir un contenu mémoire (appelé *dump* en terminologie anglo-saxonne) en cas d'erreur système et/ou de surveiller des nœuds de calcul afin de contrôler, en particulier, des paramètres tels que la température, un nombre de CPU (sigle de *Central Processing Unit* en terminologie anglo-saxonne), un état de porte de refroidissement d'armoire informatique et un état de commutateurs.

Selon un mode de réalisation particulier, le cluster d'administration comprend deux nœuds d'administration, un ensemble de stations de traitement dont le nombre est avantageusement dépendant de la taille du cluster et un système de fichiers partagé entre les nœuds d'administration et les stations de traitement. Les stations de traitement sont ici des nœuds de service dédiés à l'exécution de services.

Les nœuds d'administration sont en charge de distribuer les services d'administration entre toutes les stations de traitement. Chaque station de traitement exécute un ou plusieurs services sur tout ou partie du cluster de calcul.

Le système de fichiers partagé permet de rendre disponible à n'importe quel nœud du cluster d'administration les données écrites par l'une des stations de traitement et, ainsi, de pouvoir répartir la collecte des informations et leur traitement sur des nœuds différents.

Une décomposition des services en sous services est effectuée en fonction des heuristiques propre à chaque service et en fonction de la topologie de cluster.

Ces sous services sont ensuite répartis dans des machines virtuelles hébergées par les stations de traitement. Il est observé que ces sous services étant similaires aux services dont ils dérivent, ils sont considérés, dans la suite de la description, dans un souci de clarté, comme ces services.

Chaque machine virtuelle abrite un ou plusieurs services et chaque instance de service mise en œuvre dans une machine virtuelle gère un unique groupe d'équipements. La configuration d'un service se fait en fonction du groupe correspondant.

Toutes les machines virtuelles sont ici générées à partir d'une même et unique image générique. Leur caractérisation et leur configuration sont rendues possible au démarrage de la machine virtuelle à l'aide de données de configuration. Comme décrit ci-dessous, le démarrage, la surveillance et l'arrêt de ces machines virtuelles sont réalisés via un outil de haute disponibilité mis en œuvre dans le cluster d'administration.

La figure 3 illustre schématiquement un exemple de cluster 300 mettant en œuvre l'invention.

Les nœuds de service du cluster 300 comprennent ici deux nœuds d'administration 305-1 et 305-2 notés MNGT permettant une administration centralisée. Ils comprennent également des stations de traitement notées MWS (sigle de *Management WorkStation* en terminologie anglo-saxonne), au nombre de *n* (la valeur de *n* étant avantageusement déterminée selon la taille du cluster), référencées 310-1 à 310-n, ainsi qu'un serveur de fichiers 315, ici de type NFS (sigle de *Network File System* en terminologie anglo-saxonne), et des nœuds de calcul génériquement référencés 320.

Chaque station de traitement comprend ici un module d'une infrastructure haute disponibilité, couramment appelée *framework HA* (sigle de *High Availability* en terminologie anglo-saxonne). Ainsi, par exemple, la station de traitement 310-1 comprend le module 325-1 d'une infrastructure haute disponibilité. L'ensemble des modules de l'infrastructure haute disponibilité forme cette dernière, référencée 330. Une telle infrastructure est, par exemple, l'un des outils connus sous les noms de *Cluster Suite* et *Pacemaker.* Typiquement, ces modules sont mis en oeuvre selon un mode maître/esclave, les rôles pouvant être changés dynamiquement, notamment lorsqu'une erreur est détectée.

Chaque station de traitement comprend en outre une ou plusieurs machines virtuelles encapsulant un ou plusieurs services. Ainsi, par exemple, la station de traitement 310-1 comprend ici les machines virtuelles 335-11 et 335-12. A ces fins, chaque station de traitement comprend un outil de virtualisation tel que KVM (sigle de *Kernel-based Virtual Machine* en terminologie anglo-saxonne) qui est un outil de virtualisation pour le système d'exploitation Linux (Linux est une marque).

Chaque machine virtuelle met en oeuvre un ou plusieurs services associés ici à un ensemble de nœuds de calcul. Selon l'exemple illustré sur la figure 3, les machines virtuelles 335-11 et 335-12 de la station de traitement 310-1 sont associées à un groupe de nœuds 340-1. De façon similaire, les machines virtuelles des stations de traitement 310-2 et 310-n sont associées aux groupes de nœuds 340-2 et 340-n, respectivement.

Comme illustré, les stations de traitement 310-1 à 310-n sont contrôlées par les nœuds d'administration 305-1 et 305-2. Les nœuds d'administration 305-1 et 305-2 ainsi que les stations de traitement 310-1 à 310-n peuvent accéder à des données, typiquement des fichiers, en lecture et en écriture, dans le serveur de fichiers 315.

Lorsqu'une anomalie est détectée dans une machine virtuelle d'une station de traitement ou dans une station de traitement, la ou les machines virtuelles sont transférées sur une autre station de traitement (station de traitement cible). A ces fins, la ou les machines virtuelles concernées sont arrêtées et redémarrées sur la station de traitement cible selon une image générique de machine virtuelle et un ou plusieurs fichiers de configuration spécifiques à la ou aux machines virtuelles arrêtées. Ces fichiers de configuration sont avantageusement constitués lors de la configuration du cluster.

Comme décrit précédemment, le démarrage, la surveillance et l'arrêt des machines virtuelles sont réalisés par le *framework* HA 330.

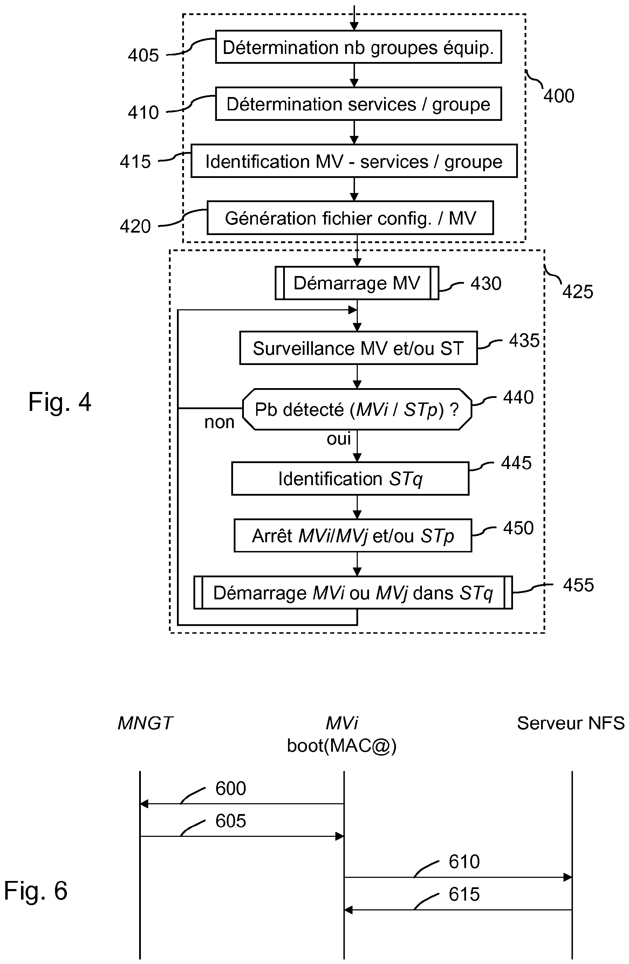

La figure 4 illustre schématiquement un exemple d'algorithme pour répartir dynamiquement des services dans un cluster d'administration.

Une première phase référencée 400 a ici pour objet la détermination de fichiers de configuration pour chaque machine virtuelle devant être mise en œuvre dans une station de traitement. Les actions effectuées lors de cette phase le sont ici par un nœud d'administration central, avantageusement lors de la configuration du cluster, à partir de données de configuration de celui-ci.

Une première étape (étape 405) de cette phase consiste à déterminer le nombre de groupes d'équipements devant être administrés. Un tel nombre peut être calculé ou déterminé, en particulier en fonction du nombre de nœuds de calcul, ou entré par un utilisateur.

Une étape suivante (étape 410) vise à identifier les services devant être mis en œuvre pour chaque groupe d'équipements. Ces informations appartiennent typiquement aux données de configuration du cluster, généralement disponibles dans une base de données accessible des nœuds d'administration.

Dans une étape suivante (étape 415), il est déterminé si, pour chaque groupe d'équipements, chaque service devant être mis en œuvre doit être mis en œuvre indépendamment des autres services devant être mis en œuvre pour le groupe d'équipements considéré afin de déterminer le nombre de machines virtuelles (notées MV) devant être utilisées pour chaque groupe d'équipements et identifier les services associés à chacune de ces machines virtuelles. En d'autres termes, chaque machine virtuelle devant être mise en œuvre est identifiée selon les groupes d'équipements et les services à mettre en œuvre pour chaque groupe.

Les fichiers de configuration de chaque machine virtuelle sont alors générés (étape 420) pour permettre la mise en œuvre des machines virtuelles identifiées et, par conséquent, des services associés.

Ces fichiers sont ici mémorisés dans un serveur de fichiers, par exemple un serveur de fichiers de type NFS accessible par les stations de traitement. Selon un mode de réalisation particulier, les fichiers de configuration sont stockés dans des répertoires dont des noms correspondant à ceux des machines virtuelles. Les fichiers de configurations comprennent notamment des identifiants et des paramètres des services devant être exécutés ainsi que des identifiants d'équipements (ou d'un groupe d'équipements).

Dans une phase d'exploitation référencée 425, mise ici en œuvre dans le *framework HA,* les machines virtuelles préalablement définies sont lancées (étape 430). A ces fins, une image générique de machine virtuelle est utilisée, la machine virtuelle étant spécialisée selon un groupe d'équipements et un ou plusieurs services à l'aide d'un fichier de configuration préalablement créé, par exemple conformément à l'étape 420.

Les machines virtuelles sont ici lancées sur les stations de traitement définies dans les données de configuration du cluster, selon un mécanisme d'attribution prédéterminé.

Selon un mode de réalisation particulier, si les machines virtuelles sont chacune dédiée à un groupe d'équipements particulier, les stations de traitement ne le sont pas. Ainsi, il peut y avoir, sur une même station de traitement, plusieurs machines virtuelles qui adressent des groupes différents d'équipements. Lorsqu'une défaillance est détectée dans une machine virtuelle ou une station de traitement, une réaffectation de la ou des machines virtuelles correspondantes est effectuée.

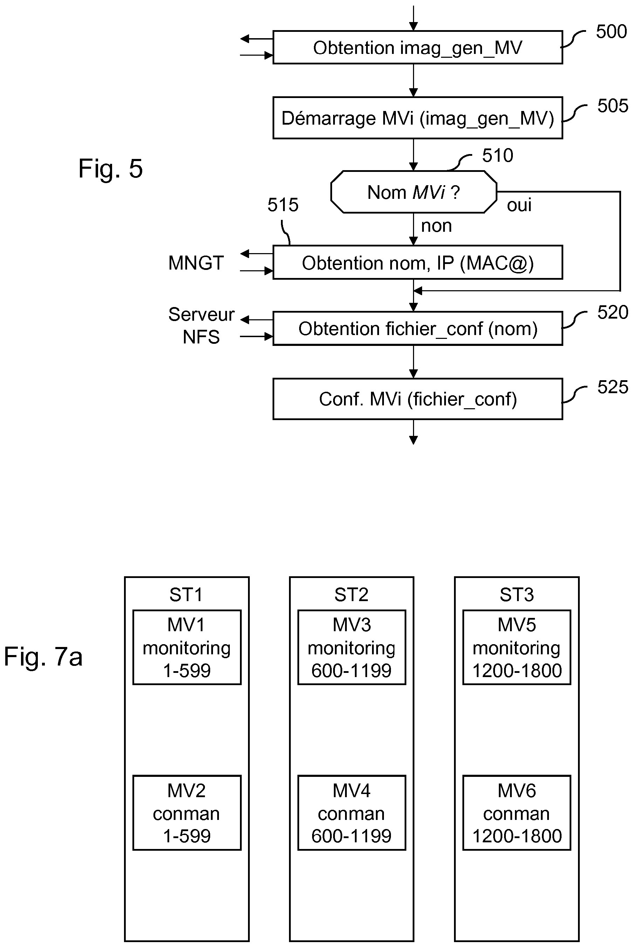

Le démarrage d'une machine virtuelle sur une station de traitement est décrit plus en détail en référence à la figure 5.

Les machines virtuelles et/ou les stations de traitement (notées ST) utilisées sont alors surveillées (étape 435) et un test est effectué (étape 440) pour déterminer si un problème a été identifié dans une machine virtuelle *MVi* ou une station de traitement *STp.* Dans la négative, l'étape de surveillance se poursuit.

Si un problème a été identifié dans une machine virtuelle *MVi* ou une station de traitement *STp,* une ou plusieurs stations de traitement *STq* pouvant mettre en oeuvre la machine virtuelle *MVi* dans laquelle un problème a été détecté ou une ou plusieurs machines virtuelles *MVj* mises en œuvre dans la station de traitement *STp* dans laquelle un problème a été détecté sont identifiées (étape 445). L'identification de telles stations de traitement peut être réalisée, par exemple, selon les capacités et les niveaux de charge des stations de traitement.

La machine virtuelle *MVi* dans laquelle un problème a été détecté ou les machines *MVj* mises en œuvre dans la station de traitement *STp* dans laquelle un problème a été détecté sont alors arrêtées ainsi que, le cas échéant, la station de traitement *STp* (étape 450). Selon un mode de réalisation particulier, lorsqu'une anomalie est détectée dans une machine virtuelle, seule cette dernière est arrêtée et relancée dans une autre station de traitement sans que les autres machines virtuelles de la station de traitement initiale ne soient arrêtées et relancées dans une autre station de traitement (la station de traitement initiale n'est donc pas arrêtée).

La machine virtuelle *MVi* dans laquelle un problème a été détecté ou les machines *MVj* mises en œuvre dans la station de traitement *STp* dans laquelle un problème a été détecté sont ensuite démarrées dans les stations de traitement *STq* préalablement identifiées (étape 455). A nouveau, l'étape 455 de démarrage de machines virtuelles est décrite plus en détail en référence à la figure 5.

Comme illustré, les étapes précédentes (étapes 435 à 455) sont répétées jusqu'à ce qu'il soit mis fin au procédé.

La figure 5 illustre schématiquement des étapes pour le démarrage d'une machine virtuelle dans une station de traitement permettant la mise en œuvre de services visant un groupe d'équipements. Ces étapes sont ici mises en œuvre et/ou contrôlées par le *framework HA.*

Une première étape (étape 500) consiste en l'initialisation du démarrage de la machine virtuelle *MVi* à démarrer. Cette étape comprend notamment l'obtention d'une image générique de machine virtuelle *(imag_gen_MV).* Elle est ici réalisée de façon standard. La machine virtuelle obtenue est ensuite démarrée (étape 505).

Dans une étape suivante, un test est effectué pour déterminer si le nom de la machine virtuelle *MVi* à démarrer est connu (étape 510). Si le démarrage de la machine virtuelle est initié par le nœud d'administration, le nom de la machine virtuelle est connu. Il n'est donc pas nécessaire de l'obtenir.

Cependant, si le démarrage de la machine virtuelle est initié par le *framework HA,* en particulier suite à la détection d'un problème dans une machine virtuelle ou une station de traitement, le nom de la machine virtuelle n'est pas connu et il est nécessaire ici de l'obtenir. Il peut l'être à partir d'une information telle qu'une adresse MAC (acronyme de *Media Access Control* en terminologie anglo-saxonne), notée MAC@. En effet, lorsqu'un problème est détecté dans une machine virtuelle ou une station de traitement, l'infrastructure haute disponibilité est généralement en mesure d'obtenir l'adresse ou les adresses MAC de la ou des machines virtuelles concernées.

L'adresse MAC de la machine virtuelle *MVi* à démarrer (ou une information équivalente) est alors adressée aux nœuds d'administration MNGT (étape 515), par exemple sous forme d'une requête dhcp (sigle de *Dynamic Host Configuration Protocol* en terminologie anglo-saxonne) pour obtenir, en réponse, le nom de la machine virtuelle *MVi* à démarrer et, de préférence, son adresse IP (sigle d*'Internet Protocol* en terminologie anglo-saxonne). Il est observé ici que seul le nœud d'administration qui connaît la machine virtuelle correspondant à l'adresse MAC transmise répond.

Le nom de la machine virtuelle *MVi* en cours de démarrage, connu ou obtenu, est alors utilisé pour obtenir les données de configuration spécifiques à cette machine virtuelle (*fichier_conf*)*,* notamment des données relatives au groupe d'équipements administrés par cette machine virtuelle et le ou les services visés (étape 520). A ces fins, un accès à un serveur de fichiers, par exemple un serveur de fichiers de type NFS, peut être créé. Les données de configuration sont alors obtenues, par exemple, en synchronisant un ou plusieurs répertoires (typiquement un répertoire ayant le nom de la machine virtuelle à démarrer).

La machine virtuelle *MVi* en cours de démarrage est alors configurée, de façon standard, selon les données de configuration obtenue (étape 525).

A titre d'illustration, selon un mode de mise en œuvre particulier, la machine virtuelle *MVi* fait une requête dhcp, au boot, pour obtenir son nom et son adresse IP puis fait un montage NFS pour récupérer, par un mécanisme de synchronisation, sa configuration qui se trouve dans un répertoire prédéterminé appelé *MVi.*

La figure 6 représente un diagramme de séquence simplifié du démarrage d'une machine virtuelle *MVi* suite à l'arrêt de cette machine virtuelle dans une autre station de traitement.

Comme illustré, lors du démarrage de la machine virtuelle ayant un identifiant connu, ici une adresse MAC (*MAC*@), à partir d'une image générique, cet identifiant est transmis aux nœuds d'administration *MNGT* (étape 600). Les nœuds d'administration *MNGT* utilisent cet identifiant pour essayer de retrouver le nom et, de préférence, l'adresse de la machine virtuelle concernée, typiquement l'adresse IP. Ces données sont mémorisées lors de la configuration du cluster. Le nom et l'adresse de la machine virtuelle lui sont ensuite transmis (étape 605) par le nœud d'administration qui connaît la machine virtuelle correspondant à l'adresse MAC transmise.

L'accès à un serveur de fichiers NFS est ensuite initié (montage NFS) pour obtenir, de préférence par un mécanisme de synchronisation, la configuration de la machine virtuelle (étapes 610 et 615). Ces données sont ici obtenues en synchronisant les fichiers d'un répertoire portant le nom de la machine virtuelle, ou un nom qui lui est lié, avec un emplacement local vierge et prédéterminé de la machine virtuelle.

Selon un mode de réalisation particulier, les données de configuration d'une machine virtuelle comprennent des données pour l'infrastructure haute disponibilité (*framework HA*) afin de permettre à cette dernière de superviser la machine virtuelle.

Un service de basculement (appelé *failover* en terminologie anglo-saxonne) est avantageusement créé dans le *framework HA* pour chaque machine virtuelle. Il permet notamment de contrôler le démarrage et l'arrêt chaque machine virtuelle ainsi que de la surveiller. A ces fins, trois scripts peuvent être utilisés (un premier étant utilisé pour identifier les services à démarrer lors du démarrage de la machine virtuelle, un second étant utilisé pour identifier les services à arrêter lors de l'arrêt de la machine virtuelle et le troisième étant utilisé pour identifier des services à démarrer lors du démarrage de la machine virtuelle, par exemple des services liés à des services identifiés via le premier script).

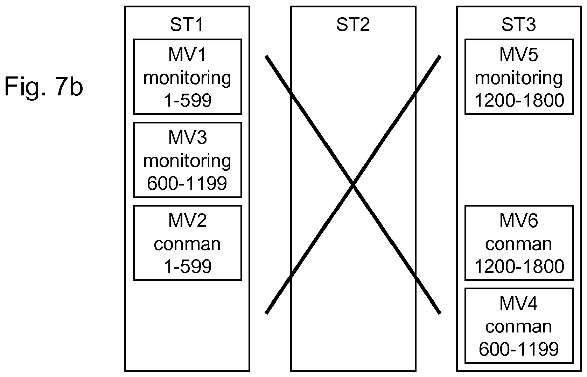

La figure 7, comprenant les figures 7a et 7b, illustre un exemple de réaffectation de machines virtuelles (et donc de services) dans un cluster d'administration, par exemple suite à la détection d'une anomalie dans une station de traitement mettant en œuvre ces machines virtuelles.

La figure 7a représente l'état de trois stations de traitement, notées ST1, ST2 et ST3, d'un cluster d'administration (non représenté) à un instant donné.

La station de traitement ST1 comprend ici une machine virtuelle MV1 mettant en oeuvre un service de surveillance (ou *monitoring* en terminologie anglo-saxonne) des nœuds de calcul 1 à 599 ainsi qu'une machine virtuelle MV2 mettant en œuvre un service de console de nœuds, appelé *conman* (acronyme de *console manager* en terminologie anglo-saxonne), visant des mêmes nœuds de calcul 1 à 599.

De façon similaire, la station de traitement ST2 comprend une machine virtuelle MV3 mettant en œuvre un service de surveillance des nœuds de calcul 600 à 1199 ainsi qu'une machine virtuelle MV4 mettant en œuvre un service de console de nœuds visant ces mêmes nœuds de calcul.

De même, la station de traitement ST3 comprend une machine virtuelle MV5 mettant en œuvre un service de surveillance des nœuds de calcul 1199 à 1800 ainsi qu'une machine virtuelle MV6 mettant en œuvre un service de console de nœuds visant ces mêmes nœuds de calcul.

A un instant suivant l'instant de l'état des stations de traitement représenté sur la figure 7a, une anomalie est détectée dans la station de traitement ST2. Les machines virtuelles MV3 et MV4 sont alors arrêtées et les stations de traitement ST1 et ST3 sont identifiées pour mettre en œuvre les machines virtuelles MV3 et MV4, respectivement.

La figure 7b représente l'état des trois stations de traitement ST1, ST2 et ST3 après que les machines virtuelles MV3 et MV4 aient été déplacées vers les stations de traitement ST1 et ST3, respectivement.

Comme illustré, les machines virtuelles MV3 et MV4 ont été arrêtées de la station de traitement ST2 et redémarrées sur les stations de traitement ST1 et ST3, respectivement, selon un mécanisme tel que celui décrit en référence aux figures 4 et 5. La station de traitement ST2 n'étant plus utilisée, elle peut être réparées ou arrêtée et, le cas échéant, remplacée.

Selon un mode de réalisation particulier, un mécanisme tel que le mécanisme connu sous le nom de *DNS view* est utilisé pour permettre à des nœuds de calcul d'adresser des données à une machine virtuelle particulière. Selon ce mécanisme, un serveur DNS comprend une table de correspondance pour associer des adresses d'émetteurs de requête (ici des nœuds de calcul) à des adresses de destinataire (ici des machines virtuelles) en fonction de données de configuration du cluster.

Ainsi, par exemple, un serveur DNS peut être configuré pour indiquer que si une requête provient d'un nœud de calcul ayant une adresse IP donnée, cette requête doit être adressée à une machine virtuelle ayant une autre adresse IP donnée.

Naturellement, pour satisfaire des besoins spécifiques, une personne compétente dans le domaine de l'invention pourra appliquer des modifications dans la description précédente.

## Revendications

1. Procédé de gestion dynamique de services dans un cluster d'administration d'un cluster, ledit cluster d'administration comprenant au moins un nœud d'administration central et une pluralité de nœuds de service dédiés à l'exécution de services visant une pluralité de nœuds de calcul, les nœuds de service de la pluralité de nœuds de service étant appelés stations de traitement, ledit au moins un nœud d'administration central répartissant une exécution de services dans des stations de traitement de la pluralité de stations de traitement, ce procédé étant **caractérisé en ce qu'**au moins un service est mis en œuvre via au moins une machine virtuelle exécutée par une station de traitement et **en ce qu'**il comprend les étapes suivantes :
- une étape (400) de répartition dynamique de l'exécution de services dans des stations de traitement, en fonction des services à répartir et des nœuds de calcul visés par les services à répartir, ladite étape de répartition étant mise en œuvre dans ledit au moins un nœud d'administration central de sorte que chaque machine virtuelle abrite un ou plusieurs services et que chaque instance de service mise en œuvre dans une machine virtuelle gère un unique groupe d'équipements,
- surveillance (435) d'au moins un paramètre d'exécution de ladite au moins une machine virtuelle ; et,
- si une anomalie est détectée en réponse à ladite étape de surveillance, arrêt (450) de ladite au moins une machine virtuelle exécutée par ladite station de traitement, appelée première station de traitement, et redémarrage (455) de ladite au moins une machine virtuelle dans une seconde station de traitement, distincte de ladite première station de traitement, le redémarrage de ladite au moins une machine virtuelle étant au moins partiellement basé sur des données de configuration de ladite au moins une machine virtuelle comprenant les identifiants et les paramètres des services devant être exécutés ainsi que les identifiants du groupe d'équipements gérés par l'au moins une machine virtuelle, le procédé comprenant une étape préalable de génération (420) de données de configuration de ladite au moins une machine virtuelle dans une étape de configuration dudit cluster, ladite étape de génération étant mise en œuvre au moins partiellement par ledit au moins un nœud d'administration central,
ladite étape de redémarrage comprenant :
- une étape d'obtention (500) d'une unique image générique de machine virtuelle,
- une étape de démarrage (505) de l'au moins une machine virtuelle à partir de l'image générique de machine virtuelle obtenue,
- une étape de configuration (525) de ladite au moins une machine virtuelle selon lesdites données de configuration de ladite au moins une machine virtuelle.

2. Procédé selon la revendication 1, comprenant en outre une étape d'obtention (520) desdites données de configuration de ladite au moins une machine virtuelle, lesdites données de configuration de ladite au moins une machine virtuelle étant obtenues à partir d'un identifiant de ladite machine virtuelle arrêtée.

3. Procédé selon la revendication 2 comprenant en outre une étape d'obtention (515) dudit identifiant de ladite machine virtuelle arrêtée, appelé premier identifiant, à partir d'un second identifiant de ladite machine virtuelle arrêtée, distinct dudit premier identifiant.

4. Procédé selon la revendication 2 ou la revendication 3 selon lequel ladite étape d'obtention desdites données de configuration de ladite au moins une machine virtuelle comprend une étape de synchronisation de données entre un serveur de fichiers et ladite au moins une machine virtuelle.

5. Procédé selon l'une quelconque des revendications 1 à 4 comprenant en outre une étape d'identification (445) de ladite seconde station de traitement.

6. Procédé selon l'une quelconque des revendications 1 à 5 selon lequel ledit au moins un paramètre d'exécution est un paramètre directement lié au fonctionnement de ladite au moins une machine virtuelle ou à ladite première station de traitement.

7. Programme d'ordinateur comprenant des instructions adaptées à la mise en œuvre de chacune des étapes du procédé selon l'une quelconque des revendications précédentes lorsque ledit programme est exécuté sur un ordinateur.

## Patentansprüche

1. Verfahren zur dynamischen Verwaltung von Diensten in einem Administrationscluster eines Clusters, wobei der Administrationscluster mindestens einen zentralen Administrationsknoten und eine Vielzahl von Dienstknoten umfasst, die zur Ausführung von Diensten bestimmt sind, die auf eine Vielzahl von Rechenknoten gerichtet sind, wobei die Dienstknoten aus der Vielzahl von Dienstknoten als Verarbeitungsstationen bezeichnet werden, wobei der mindestens eine zentrale Administrationsknoten eine Ausführung von Diensten auf Verarbeitungsstationen aus der Vielzahl von Verarbeitungsstationen verteilt, wobei dieses Verfahren **dadurch gekennzeichnet ist, dass** mindestens ein Dienst über mindestens eine virtuelle Maschine implementiert wird, die von einer Verarbeitungsstation ausgeführt wird, und dass es die folgenden Schritte umfasst:
- einen Schritt (400) der dynamischen Verteilung der Ausführung von Diensten auf Verarbeitungsstationen in Abhängigkeit von den zu verteilenden Diensten und den Rechenknoten, auf die die zu verteilenden Dienste gerichtet sind, wobei der Verteilungsschritt in dem mindestens einen zentralen Administrationsknoten so implementiert wird, dass jede virtuelle Maschine einen oder mehrere Dienste übernimmt und dass jede in einer virtuellen Maschine implementierte Dienstinstanz eine einzige Gruppe von Geräten verwaltet,
- Überwachen (435) von mindestens einem Ausführungsparameter der mindestens einen virtuellen Maschine; und,
- wenn als Reaktion auf den Überwachungsschritt eine Anomalie erkannt wird, Anhalten (450) der mindestens einen virtuellen Maschine, die von der Verarbeitungsstation, die als erste Verarbeitungsstation bezeichnet wird, ausgeführt wird, und Neustart (455) der mindestens einen virtuellen Maschine in einer zweiten Verarbeitungsstation, die von der ersten Verarbeitungsstation verschieden ist, wobei der Neustart der mindestens einen virtuellen Maschine zumindest teilweise auf Konfigurationsdaten der mindestens einen virtuellen Maschine basiert, die die Kennungen und Parameter der auszuführenden Dienste sowie die Kennungen der Gruppe von Geräten, die von der mindestens einen virtuellen Maschine verwaltet werden, umfassen, wobei das Verfahren einen vorausgehenden Schritt der Erzeugung (420) von Konfigurationsdaten der mindestens einen virtuellen Maschine in einem Konfigurationsschritt des Clusters umfasst, wobei der Schritt der Erzeugung zumindest teilweise durch den mindestens einen zentralen Administrationsknoten implementiert wird, wobei der Schritt des Neustarts umfasst:
- einen Schritt des Erhaltens (500) eines einzigen generischen Abbilds einer virtuellen Maschine,
- einen Schritt des Startens (505) der mindestens einen virtuellen Maschine ausgehend von dem erhaltenen generischen Abbild einer virtuellen Maschine,
- einen Schritt des Konfigurierens (525) der mindestens einen virtuellen Maschine gemäß den Konfigurationsdaten der mindestens einen virtuellen Maschine.

2. Verfahren nach Anspruch 1, ferner umfassend einen Schritt des Erhaltens (520) der Konfigurationsdaten der mindestens einen virtuellen Maschine, wobei die Konfigurationsdaten der mindestens einen virtuellen Maschine ausgehend von einer Kennung der angehaltenen virtuellen Maschine erhalten werden.

3. Verfahren nach Anspruch 2, ferner umfassend einen Schritt des Erhaltens (515) der Kennung der angehaltenen virtuellen Maschine, die als erste Kennung bezeichnet wird, ausgehend von einer zweiten Kennung der angehaltenen virtuellen Maschine, die von der ersten Kennung verschieden ist.

4. Verfahren nach Anspruch 2 oder 3, wobei der Schritt des Erhaltens der Konfigurationsdaten der mindestens einen virtuellen Maschine einen Schritt des Synchronisierens von Daten zwischen einem Dateiserver und der mindestens einen virtuellen Maschine umfasst.

5. Verfahren nach einem der Ansprüche 1 bis 4, ferner umfassend einen Schritt des Identifizierens (445) der zweiten Verarbeitungsstation.

6. Verfahren nach einem der Ansprüche 1 bis 5, wobei der mindestens eine Ausführungsparameter ein Parameter ist, der direkt mit dem Betrieb der mindestens einen virtuellen Maschine oder der ersten Verarbeitungsstation in Zusammenhang steht.

7. Computerprogramm, Anweisungen umfassend, die dazu ausgelegt sind, jeden der Schritte des Verfahrens nach einem der vorstehenden Ansprüche zu implementieren, wenn das Programm auf einem Computer ausgeführt wird.

## Claims

1. A method for dynamic management of services in an administration cluster of a cluster, said administration cluster comprising at least one central administration node and a plurality of service nodes dedicated to the execution of services targeting a plurality of compute nodes, the service nodes of the plurality of service nodes being referred to as processing stations, said at least one central administration node distributing an execution of services in processing stations of the plurality of processing stations, this method being **characterized in that** at least one service is implemented via at least one virtual machine executed by a processing station and **in that** it comprises the following steps:
- a step (400) of dynamically distributing the execution of services in processing stations, based on the services to be distributed and the compute nodes targeted by the services to be distributed, said distribution step being implemented in said at least one central administration node such that each virtual machine hosts one or more services and that each service instance implemented in a virtual machine manages a single group of systems,
- monitoring (435) at least one execution parameter of said at least one virtual machine; and,
- if an anomaly is detected in response to said monitoring step, shutting down (450) said at least one virtual machine executed by said processing station, referred to as first processing station, and restarting (455) said at least one virtual machine in a second processing station, distinct from said first processing station, the restarting of said at least one virtual machine being at least partially based on configuration data of said at least one virtual machine comprising the identifiers and the service parameters which must be executed as well as the identifiers of the group of systems managed by the at least one virtual machine, the method comprising a preliminary step of generating (420) configuration data of said at least one virtual machine in a configuration step of said cluster, said generating step being implemented at least partially by said at least one central administration node, said restarting step comprising:
- a step of obtaining (500) a unique generic virtual machine image,
- a step of starting (505) at least one virtual machine from the generic virtual machine image obtained,
- a step of configuring (525) said at least one virtual machine according to said configuration data of said at least one virtual machine.

2. The method according to claim 1, further comprising a step of obtaining (520) said configuration data of said at least one virtual machine, said configuration data of said at least one virtual machine being obtained from an identifier of said shutdown virtual machine.

3. The method according to claim 2, further comprising a step of obtaining (515) said identifier of said shutdown virtual machine, referred to as first identifier, from a second identifier of said shutdown virtual machine, distinct from said first identifier.

4. The method according to claim 2 or claim 3, whereby said step of obtaining said configuration data of said at least one virtual machine comprises a step of synchronizing data between a file server and said at least one virtual machine.

5. The method according to any one of claims 1 to 4, further comprising a step of identifying (445) said second processing station.

6. The method according to any one of claims 1 to 5, whereby said at least one execution parameter is a parameter directly linked to the operation of said at least one virtual machine or to said first processing station.

7. A computer program comprising instructions suitable for implementing each of the steps of the method according to any one of the preceding claims when said program is executed on a computer.
